# EUROPEAN PATENT SPECIFICATION

(11) **EP 2 643 176 B1**
(45) Date of publication and mention of the grant of the patent: **20.12.2017**
(21) Application number: 11790860.8
(22) Date of filing: 25.11.2011
(51) Int. Cl.: H01M 10/0525, H01M 10/625, H01M 10/663, H01M 10/6567, H01M 10/667, H01M 10/613, B60H 1/00

(54) **A THERMAL ENERGY ADMINISTRATION SYSTEM**
SYSTEM ZUR WÄRMEENERGIEVERWALTUNG
SYSTÈME DE GESTION D'ÉNERGIE THERMIQUE

(30) Priority: 25.11.2010 DK 201001071; 05.05.2011 DK 201100342
(43) Date of publication of application: 02.10.2013
(73) Proprietor: Danfoss Power Electronics A/S, 6300 Gråsten (DK)
(72) Inventor: OLESEN, Klaus, DK-6400 Sønderborg (DK); HOLST, Jørgen, DK-6470 Sydals (DK); VESTERGAARD, Bjørn, DK-6200 Aabenraa (DK); ROLFING, Asbjørn, 100022 Beijing (CN)
(74) Representative: Whiting, Gary
(86) International application number: PCT/DK2011/000138
(87) International publication number: WO 2012/069052

(56) References cited:
- WO-A2-2009/046269
- DE-A1-102007 011 024
- US-A- 1 942 295
- US-A- 6 138 466

## Description

### FIELD OF THE INVENTION

The present invention relates to a thermal energy administration system for an electrical vehicle or any vehicle comprising an electrical motor, such as an electrical motor for propelling the vehicle.

### BACKGROUND OF THE INVENTION

In electrical vehicles such as electric cars, battery preservation is essential to the action range of the vehicle, as the energy from the battery may be the sole source of energy for propelling the vehicle. This is a key problem in relation to electrical vehicles, since a key inhibitor for buying an electrical vehicle is the limited driving range. Potential drivers simply refrain from buying such vehicles due to the fear that the batteries may run out of energy before the user reaches the destination.

It is an object of one or more embodiments of the present invention to address this problem of range anxiety.

It is an object of one or more embodiments of the present invention to increase the range of electrical vehicles.

It is an object of one or more embodiments of the present invention to provide a thermal energy administration system which increases the battery life of an electrical vehicle.

US 6,138,466 describes a battery cooling system to cool an electric vehicle battery pack and extend the operating range of an automotive heat pump system. Waste heat from the battery pack is transferred to a secondary coolant system thereby cooling the battery pack. A secondary heat exchanger is coupled between the secondary cooling system and a reversible HVAC system. The heat energy transferred to the reversible HVAC system supplements the existing stored energy thereby extending the heating mode operating range of the HVAC system. The requirement for supplemental electric heating is reduced, further increasing the electric vehicle energy efficiency.

### DESCRIPTION OF THE INVENTION

In a first aspect, the invention relates to a thermal energy administration system for an electrical vehicle comprising an electrical motor for propelling the vehicle, the thermal energy management system comprising an air conditioning system defining a closed circuit which accommodates a cooling medium and comprises: a compressor, a first thermal energy exchanging device, a second thermal energy exchanging device, and a sub-circuit, wherein the sub-circuit comprises a third thermal energy exchanging device which is arranged to transfer thermal energy between cooling medium in the sub-circuit and one or more electrical devices of the electrical vehicle, wherein the sub-circuit is adapted to circulate the cooling medium in a loop through the third thermal energy exchanging device and one of the first and the second thermal energy exchanging devices. The system is arranged so that, in a first mode of operation, the cooling medium circulates in a loop through the third thermal energy exchanging device and the first thermal energy exchanging device without passing through the compressor and, in a second mode of operation, the cooling medium circulates in a loop through the third thermal energy exchanging device and the second thermal energy exchanging device without passing through the compressor. A cooling medium flow direction shifting device (such as a four-way switch) may be provided for setting the mode of operation.

At least one of the one or more electrical devices of the electrical vehicle may comprise a battery and/or the electrical motor and/or an audio system and/or an electrical engine and/or a combustion engine and/or a power controller for controlling the electrical power supplied to the electrical motor.

In one form of the invention, the electrical devices comprise a battery and/or a power module of the electrical vehicle. In this way, heat generated by the battery and/or the power module can be used to provide heat to a vehicle cabin of the electrical vehicle. Indeed, in some arrangements, the heat generated by the battery and/or the power module may be the only source of heat used to heat the vehicle cabin.

The sub-circuit may comprise a flow regulator for controlling the flow of the cooling medium through said sub-circuit.

In some forms of the invention, a plurality of sub-circuits is provided, wherein each sub-circuit comprises a thermal energy exchanging device which is arranged to transfer thermal energy between the cooling medium in the sub-circuit and one or more electrical devices of the electrical vehicle, wherein each sub-circuit is adapted to circulate the cooling medium in a loop through the thermal energy exchanging device of said sub-circuit and one of the first and the second thermal energy exchanging devices.

One advantage of the present invention is that any excess heat or any excess coldness (see definition below) may be used to heat or cool heating requiring or cooling requiring units of the thermal energy administration system. In the case of conventional electrical vehicles, one apparatus within the vehicle may have a surplus of thermal energy which is disposed of to the surroundings e.g. by radiation, while at the same time another apparatus has a deficit of thermal energy and thus comprises an internal heating unit which by means of electrical energy is used to provide the needed thermal energy. By allowing thermal energy from one apparatus to be used in another apparatus, it is possible to postpone the point in time where the battery of the electrical vehicle needs to be recharged. This increases the driving range of the vehicle.

The thermal energy administration system is adapted to transfer thermal energy from one unit to another. The heat may be transferred by means of a cooling medium as is described in further detail below.

In the context of the present invention, the term "heat-absorbing" may be used as an alternative to "heat requiring". Units which absorb heat may be said to have a deficit of thermal energy or heat, or to have a surplus of coldness. Similarly in the context of the present invention, the term "heat-emitting" may be used as an alternative to "cooling requiring". Units which emit heat may be said to have a surplus of thermal energy or heat, or to have a deficit of coldness. In the context of the present invention, the term "coldness" is used to designate lack of, or a low degree of, thermal energy. Thus, if for example a cold and a hot member are in direct contact and the temperature of the cold member is lower than the temperature of the hot member, then coldness is transferred from the cold member to the hot member. Similarly, heat is transferred from the hot member to the cold member.

In the context of the present invention, the term "electrical vehicle" shall be understood as any vehicle which comprises an electrical device for propelling the vehicle. Examples are hybrid vehicles comprising both combustion engines and electrical engines, and vehicles which are 100 percent propelled by an electrical motor. Moreover, it will be appreciated that a vehicle in the context of the present invention covers any means of transport. Examples are: bicycles, cars, motorcycles, trains, ships, boats, and aircraft.

In one embodiment, the "electrical vehicle" is a vehicle which comprises no combustion engine at all. Alternatively, the "electrical vehicle" may be a vehicle which comprises no combustion engine for propelling the vehicle. In another embodiment, the "electrical vehicle" is a vehicle which comprises one or more electrical motors for propelling the electrical vehicle. Alternatively, the "electrical vehicle" may be construed as a vehicle where any motor used to propel the vehicle is electrical.

In the context of the present invention, the term "electrical motor" shall be understood as a device which converts electrical energy into mechanical energy suitable for propelling the electrical vehicle. One example is an electrical motor which converts electrical energy into rotational energy, which may be used to cause wheels of the vehicle to rotate.

The electrical motor for propelling the vehicle may be a Direct Current or an Altering Current motor. Examples of electrical motors are bushed or brushless motors, coreless/iron less motors, synchronous motors, asynchronous motors, servo motors and stepper motors.

It will be appreciated that the abovementioned phrase "an air conditioning system which is arranged to heat one or more heat requiring units" shall be understood such that thermal energy is transferred from the air conditioning system to one or more of the heat requiring units. Similarly, the phrase "an air conditioning system which is arranged ... to cool one or more cooling requiring units" shall be understood such that thermal energy is transferred from the cooling requiring units to the air conditioning system.

In order to cool and heat the cooling and the heating requiring units, respectively, at least a part of the air conditioning system may be in direct contact with at least a part of the respective unit, so as to allow coldness or heat to be transferred.

One or more of the heating requiring units and/or one or more of the cooling requiring units may define a thermal energy transfer compartment defining an inlet and an outlet both of which are fluidly connected to the air conditioning system. In use the air conditioning fluid may thus flow into the compartment via the inlet and out of the compartment via the outlet.

It will be appreciated that the closer this compartment is to the heat generating and the coldness generating units, the more effectively heat or coldness may be transferred. In one embodiment, the compartment encirculates fully or partly the heat or coldness generating elements of the heat and cooling requiring unit.

At least one of the heat requiring unit(s) and the cooling requiring unit(s) is an electrical device of the electrical vehicle. In the context of the present invention, the term "electrical device" shall be understood as a device which produces or is at least partly powered by electricity. Examples of electrical devices are an electrical motor for propelling the vehicle, heating elements for generating thermal energy e.g. in the cabin of the electrical vehicle, fans for creating ventilation in the cabin of the vehicle, pumps for pumping a windshield washer fluid.

In one embodiment, at least one of the one or more cooling requiring units comprises an electrical battery and/or an electrical motor for propelling the electrical vehicle forwards or backwards and/or an audio system and/or an electrical motor/engine and/or a combustion engine and/or a power controller for controlling the electrical power supplied to the electrical motor.

The thermal energy administration system may comprise at least two cooling requiring units in the form of an electrical battery, such as two, such as three etc. One or more of the batteries may be a lithium battery, or an alkaline battery, or any other kind of battery.

Examples of electrical motors are motors for operating a servo pump of a servo steering system or other hydraulic control system, door or window operating motors and mirror or light servo motors.

The electrical motor for propelling the vehicle may be one of these motors. In one embodiment, the electrical vehicle comprises more than one electrical motor for propelling the vehicle, such as two, three, four, etc. At least one - such as all -of the electrical motors may be connected to air conditioning system such that heat or coldness may be transferred.

In a one embodiment, at least one of the one or more heating requiring units comprises a battery and/or an electrical motor and/or a combustion engine and/or a seat heating device and/or a window defrosting device and/or a window demisting device.

In one embodiment, the system according to the present invention is adapted to heat a combustion engine to a desirable operation temperature. As an example the vehicle may initially be operated by an electrical motor. During this use of the electrical motor, thermal energy is generated which is transferred to the combustion engine. This may especially be desirable in the winter and provides the advantage that once the combustion engine is operated the fuel consumption is lower due to the elevated temperature of the combustion engine.

In the context of the present invention, the term "air conditioning system" shall be understood as a system comprising a cooling medium which is used to transfer thermal energy.

In one embodiment, the air conditioning system comprises a controller for controlling the temperature of one or more units of the air conditioning system or for controlling the temperature in a space e.g. a passenger cabin, in which the an unit of the air conditioning system is provided.

In one embodiment, the air conditioning system defines a closed circuit which accommodates a cooling medium and which comprises:
o a compressor,
o a first thermal energy exchanging device,
o a second thermal energy exchanging device, and
o a pump.

The cooling medium which flows in the system according to the present invention may be any kind of coolant. An ideal coolant has high thermal capacity, low viscosity, is low-cost, non-toxic, and chemically inert; neither causing nor promoting corrosion of the system. The cooling medium may be a single phase coolant, which does not change phase during use, or a two phase coolant which changes phase during use. An example of such refrigerant would be R-134a.

In one embodiment, the closed circuit comprises one or more sub-circuits each of which comprises a third thermal energy exchanging device which is arranged to transfer thermal energy between the cooling fluid in the sub-circuit and one or more of the heat requiring units and/or one or more of the cooling requiring units, wherein the each sub-circuit is adapted to circulate the cooling medium in a loop through the third thermal energy exchanging device and one of the first and the second thermal energy exchanging devices.

In yet another embodiment, one or more of the sub-circuits comprises a flow regulator for controlling the flow of the cooling medium through said sub-circuit.

In one embodiment, the air conditioning device further comprises a cooling medium flow direction shifting device (such as a 4-way switch) for shifting the flow direction of the cooling medium from a first direction in which the compressor pumps the cooling medium towards the first thermal energy exchanging devices to a second direction in which the compressor pumps the cooling medium towards the second thermal energy exchanging devices.

It will be appreciated that by allowing the compressor to pump the cooling medium in a first and a second direction, the functioning of the device may be changed.

When the compressor pumps the cooling medium in the first direction the cooling medium passes through the elements in the closed circuit in the following order: compressor - first thermal energy exchanging device - expansion valve(s) - second thermal energy exchanging device - compressor. When the cooling medium passes through the closed circuit in this manner, the first thermal energy exchanging device functions as a condenser and is thus used for transferring thermal energy from the cooling medium to the surroundings of the condenser. At the same time, the second thermal energy exchanging device functions as an evaporator and is thus used to retrieve thermal energy from the surroundings of the evaporator to the cooling medium.

When the compressor pumps the cooling medium in the second direction the cooling medium passes through the elements in the closed circuit in the following order: compressor - second thermal energy exchanging device - expansion valve(s) - first thermal energy exchanging device - compressor. When the cooling medium passes through the closed circuit in this manner, the second thermal energy exchanging device functions as a condenser and is thus used for transferring thermal energy from the cooling medium to the surroundings of the condenser. At the same time, the first thermal energy exchanging device functions as an evaporator and is thus used to retrieve thermal energy from the surroundings of the evaporator to the cooling medium.

It will be appreciated that by changing the flow direction between the first and the second direction the system may be changed from functioning as a air conditioning system, in which air is cooled by means of the second thermal energy exchanging device, to a heat pump, in which air is heated by means of the second thermal energy exchanging device.

In yet another embodiment, a first duct system and a second duct system is provided. The first duct system may be adapted to move air from a passenger cabin of the vehicle, past one of the first and the second thermal energy exchanging devices and back into the passenger cabin. The second duct system may be adapted to move air from the passenger cabin of the vehicle, past the other one of the first and the second thermal energy exchanging devices and back into the passenger cabin.

Moreover in one embodiment, the duct system comprises an air flow direction shifting device having a first state in which air is directed from the passenger cabin past the first thermal energy exchanging device and back into the passenger cabin, and a second state in which air is directed from the passenger cabin past the second thermal energy exchanging device and back into the passenger cabin.

By providing an air flow direction shifting device, it is possible to change the direction of the air flow it is possible to shift between cooling the passenger cabin and heating the passenger cabin and vice versa. As an example, the first thermal energy exchanging device may be adapted to transfer coldness to its surroundings while the second thermal energy exchanging device is adapted to transfer heat to its surroundings. Thus by allowing the air of the passenger cabin to flow past the first energy exchanging device, the air is cooled whereby the passenger cabin is cooled. If on the other hand, the air of the passenger cabin is directed past the second energy exchanging device this air is heated whereby the passenger cabin is heated. It will be appreciated than in other embodiments, the first energy exchanging device is used to heat the air from the passenger cabin, while the second energy exchanging device is used to cool the air from the passenger cabin. Moreover it will be appreciated that by providing the abovementioned duct system, an alternative to changing the flow direction of the cooling medium may be provided. However, in one embodiment, the two solutions are combined whereby the abovementioned duct system is provided, while at the same time the air conditioning device is adapted to change the flow direction.

In one embodiment, the thermal energy administration system comprises further duct systems which are arranged to allow air to flow past the first and/or the second energy exchanging devices so as to cool or heat other devices in the electrical vehicle. As an example the thermal energy administration system may comprise a third duct system and a fourth duct system, the third duct system being adapted to move air from another area of the vehicle such as a battery compartment of the vehicle, past one of the first and the second thermal energy exchanging devices and back into the battery compartment, the second duct system being adapted to move air from the battery compartment of the vehicle, past the other one of the first and the second thermal energy exchanging devices and back into the battery compartment. Again this is an alternative to changing the flow direction of the cooling medium. However, it will be appreciated that when the flow direction of the cooling medium is changed it may potentially affect the function of all the thermal energy exchanging units of the thermal energy administration system. However, by changing the direction of the air flow in e.g. the first and the fourth duct systems, the battery may change from a state where it is heated to a state where it is cooled without causing a change in the way the remaining units of the system is cooled or heated.

In a third aspect, the present invention relates to an electrical vehicle comprising a thermal energy administration system according to the first or second aspects of the invention.

The present invention also relates to a method of operating an electrical motor of a motor vehicle (e.g. by means of a power module), wherein the motor vehicle comprises a thermal energy administration system comprising an air conditioning system defining a closed circuit which accommodates a cooling medium, the air conditioning system having a compressor, a first thermal energy exchanging device, a second thermal energy exchanging device and a sub-circuit, wherein the sub-circuit comprises a third thermal energy exchanging device which is arranged to transfer thermal energy between cooling fluid in the sub-circuit and one or more electrical devices of the electrical vehicle, the method comprising: circulating the cooling medium in a loop through the third thermal energy exchanging device and one of the first and the second thermal energy exchanging devices. A first mode of operation is provided in which the cooling medium circulates in a loop through the third thermal energy exchanging device and the first thermal energy exchanging device without passing through the compressor. A second mode of operation is provided in which the cooling medium circulates in a loop through the third thermal energy exchanging device and the second thermal energy exchanging device without passing through the compressor. The method may include selecting the mode of operation of the thermal energy administration system. A switch, such as a four-way switch, may be provided for setting the mode of operation.

The method may further comprise controlling the flow of the cooling medium through said sub-circuit (e.g. using a flow regulator).

The thermal energy administration system may comprises a plurality of sub-circuits, wherein each sub-circuit comprises a thermal energy exchanging device which is arranged to transfer thermal energy between the cooling fluid in the sub-circuit and one or more electrical devices of the electrical vehicle, wherein each sub-circuit is adapted to circulate the cooling medium in a loop through the thermal energy exchanging device of said sub-circuit and one of the first and the second thermal energy exchanging devices. By way of example, the thermal energy administration system may comprise two sub-circuits, with a first sub-circuit including a battery of the electrical vehicle and the second sub-circuit including a power module of the electrical vehicle.

The invention may comprise any combination of the various elements of the invention as set out above.

### BRIEF DESCRIPTION OF THE INVENTION

The invention will now be described in further detail with reference to the figures in which:
Fig. 1 discloses a prior art system,
Figs. 2 and 3 disclose a first embodiment not forming part of the invention,
Fig. 4 discloses a flow diagram of the first embodiment
Figs. 5 and 6 disclose diagrams illustrating the thermodynamics of the present invention,
Fig. 7 discloses a flow diagram of an embodiment of the invention,
Figs. 8 and 9 show flow diagrams the first embodiment when operated in an air conditioning mode and a heat pump more respectively, and
Figs. 10 and 11 show flow diagrams of the embodiment of the invention when operated in an air conditioning mode and a heat pump mode respectively.

### DETAILED DESCRIPTION OF THE INVENTION

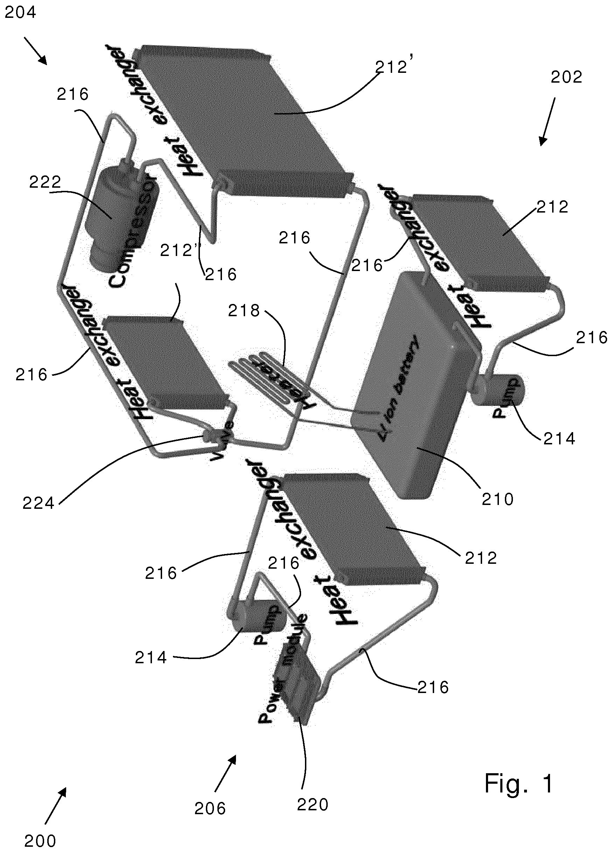

Fig. 1 discloses a conventional system 200 comprising three separate systems, a conventional battery cooling system 202, a conventional air conditioning system 204 and a conventional power module cooling system 206. The conventional battery cooling system 202 comprises a battery 210, which is coupled to a heat exchanger 212 and a pump 214. The pump 214 is operated to cause a cooling medium to flow in the pipes 216. Moreover, a heater element 218 is electrically connected to the battery 210. The battery is used to supply electrical energy to one or more devices of the vehicle in which the conventional system 200 is installed.
The conventional power module cooling system 206 comprises a power module 220, which is coupled to a heat exchanger 212 and a pump 214. The pump 214 is operated to cause a cooling medium to flow in the pipes 216. The power module 220 may be used to control the electrical motor for propelling the vehicle.
The conventional air conditioning system 204 comprises two heat exchangers 212', 212" which are fluidly connected to each other via a compressor 222 and expansion valves 224 and pipes 216. The conventional air conditioning system 204 may be used to control the temperature of a passenger cabin (not shown) of the electrical vehicle.
Normally, as it may be seen from Fig. 1, excessive thermal energy from the battery cooling system 202 and the conventional power module cooling system 206 is not used to elevate the temperature in a passenger cabin but is instead wasted by being allowed to be radiated to the surroundings by means of heat exchangers 212. The result is that a heater element 218 is provided for heating the vehicle. However, when the vehicle is an electrical vehicle, battery lifetime is an essential performance parameter as it is decisive for the range of the vehicle. Thus by eliminating the heater element 218 the battery lifetime and the range of the vehicle may be extended. Moreover, the present invention provides a simpler solution with fewer elements. This causes the vehicle to be cheaper to manufacture.

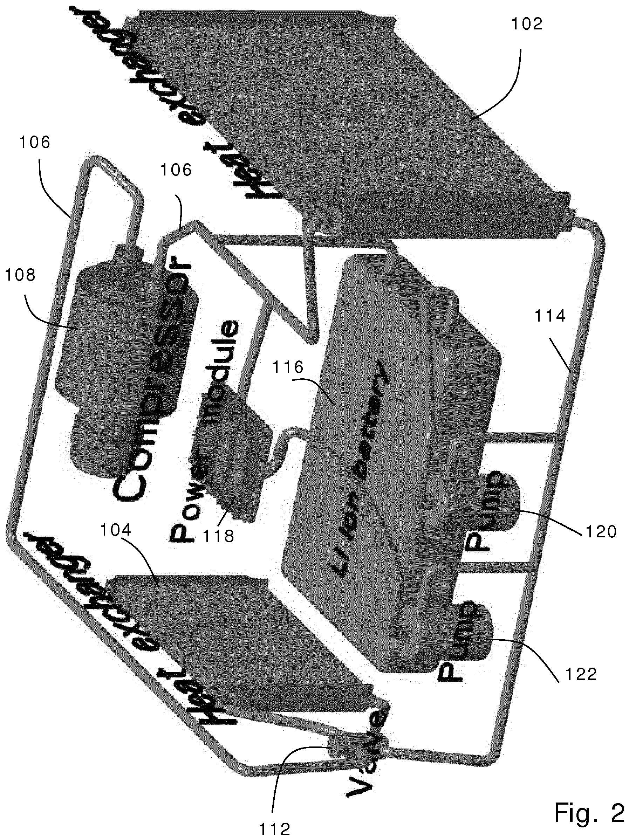

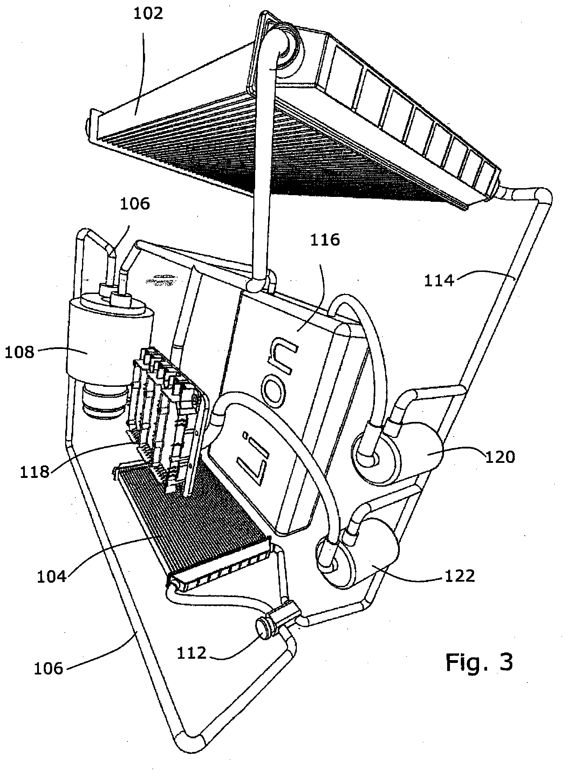

Figs. 2-4 disclose the thermal energy administration system 100 according to an embodiment not forming part of the present invention. The thermal energy administration system 100 comprises a first heat exchanger 102 and a second heat exchanger 104. The first heat exchanger 102 and the second heat exchanger 104 are fluidly connected to each other via first pipes 106 and a compressor 108. A four-way valve 110 (not shown in Figs. 2 or 3) may be arranged to change the flow direction of a cooling medium provided inside the thermal energy administration system 100, this is described in further detail below. Alternatively, a compressor 108 may be employed which is suitable to be reversed, so as to convey the cooling medium in the opposite direction around the circuit.

Moreover, the first heat exchanger 102 and the second heat exchanger 104 are also fluidly connected via expansion valves 112 and second pipes 114.

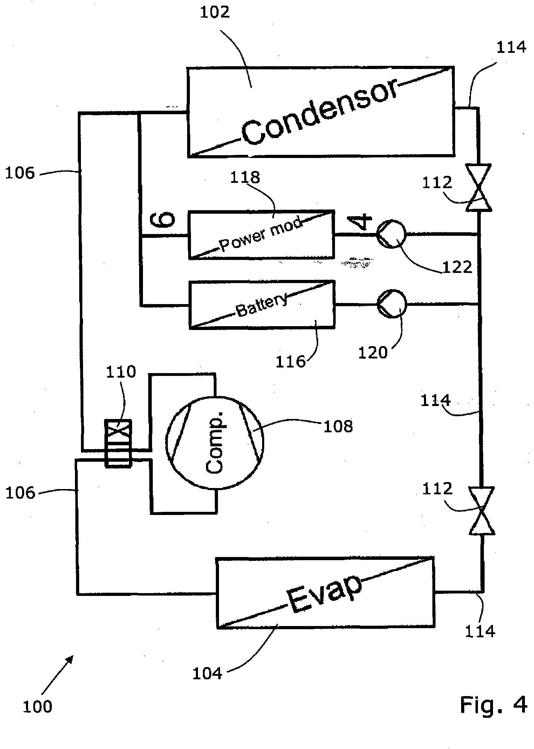

Due to the four-way valve 110 the compressor 108 may be operated to circulate the cooling medium in a clockwise direction and a counter clockwise direction when seen in Fig. 4.

The first heat exchanger 102, the second heat exchanger 104, the first pipes 106, the compressor 108, the second pipes 114 and the expansion valves 112 function as an air conditioning system. However depending on the flow direction the first heat exchanger 102 and the second heat exchanger 104 operate in different ways.

If the flow direction is clockwise, the first heat exchanger 102 functions as a condenser, while the second heat exchanger 104 functions as an evaporator. If on the other hand the flow direction is counter clockwise, the first heat exchanger 102 functions as an evaporator, while the second heat exchanger 104 functions as a condenser. In a similar manner to a conventional air conditioning system, the evaporator will, during use, remove thermal energy from its surroundings and transfer this thermal energy to the cooling medium. Similarly, the condenser will, during use, transfer thermal energy from the cooling medium to the surroundings of the condenser.

In one embodiment, the second heat exchanger 104 is provided inside a passenger cabin (not shown) of a vehicle, while the first heat exchanger 102 is provided outside this passenger cabin. Accordingly, when the cooling medium is circulated in a clockwise direction, the thermal energy administration system 100 functions as an air conditioning system which lowers the temperature in the passenger cabin. If, on the other hand, the cooling medium is circulated in the counter clockwise direction, the thermal energy administration system 100 functions as a heat pump which elevates the temperature in the passenger cabin.

In the present invention, a battery 116 and a power modulator 118 are coupled to the thermal energy administration system 100 such that the system may be used to cool the battery 116 and/or the power modulator 118. Alternatively, the thermal energy from the battery 116 and/or the power modulator 118 may be used to elevate the temperature of the cooling medium, which may be advantageous when the passenger cabin need to be heated e.g. during the winter.

A battery pump 120 and a power modulator pump 122 may be provided for pumping the cooling medium through a thermal energy exchange manifold (not shown) of the battery 116 and the power modulator 118, respectively. When the cooling medium is pumped through these thermal energy exchange manifolds, thermal energy may be retrieved from the battery 116 and/or the power modulator 118 whereby these two elements 116,118 are cooled. Alternatively, thermal energy may be transferred to the battery 116 and/or the power modulator 118 such that their temperature is elevated.

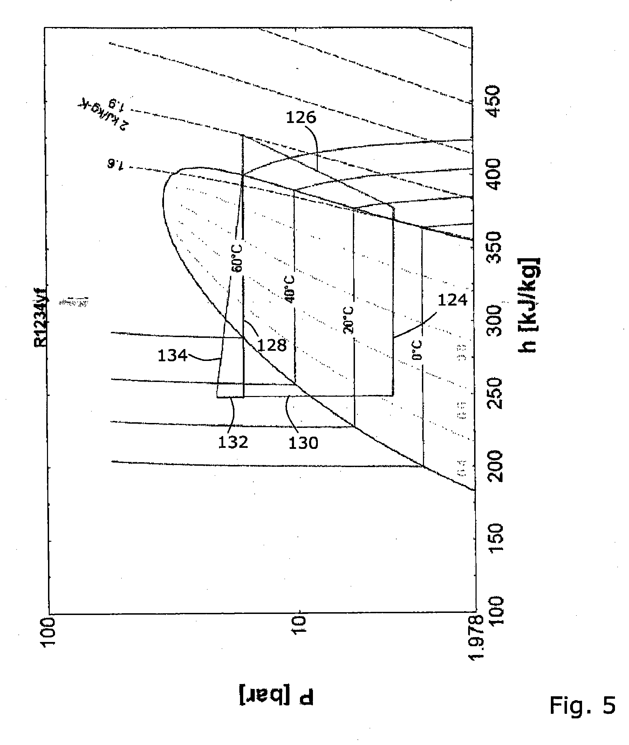

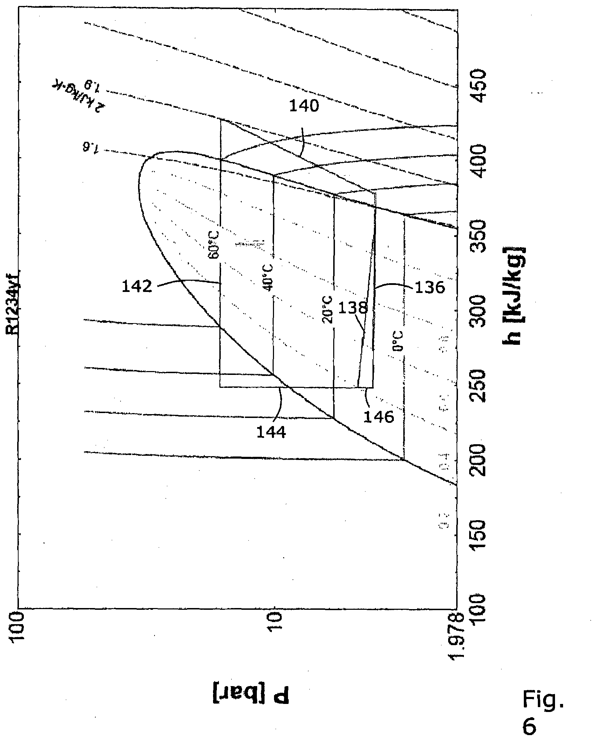

Figs. 5 and 6 disclose two different uses of the thermal energy administration system according to the present invention. In Fig. 5, the system is used to cool the passenger cabin. In Fig. 6, the system is used to elevate the temperature in the passenger cabin. The graphs in Figs. 5 and 6 are explained in further detail below.

In Fig. 5 the line 124 illustrates the transfer of heat from the passenger cabin to the cooling medium, by evaporation of the cooling medium in the evaporator. The line 126 illustrates operation of the compressor and line 128 illustrates transfer of thermal energy from the cooling medium to the surroundings of the vehicle in the condenser. Line 130 illustrates the flow of the cooling medium through the expansion valve. Line 132 illustrates the operation of a pump, and line 134 illustrates transfer of thermal energy from the battery and/or other heat generating units such as electrical units to the cooling medium.

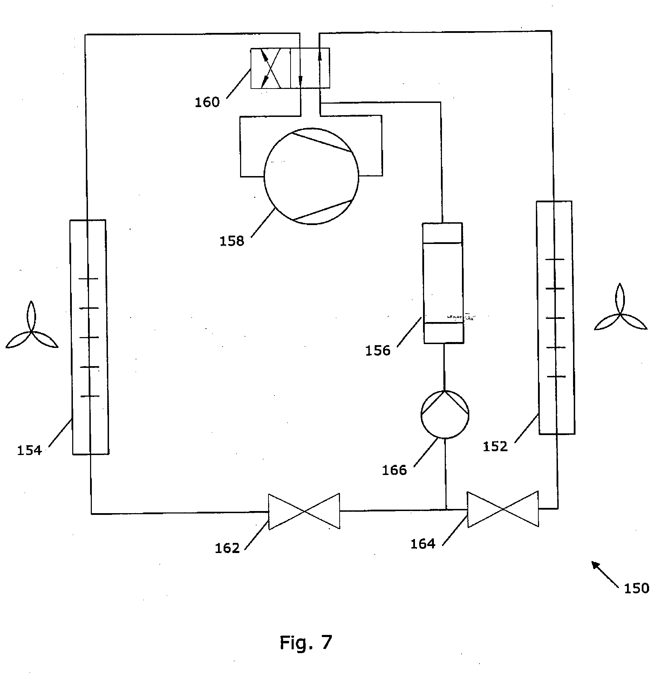

In Fig. 6, the system is used for heating the passenger cabin. In the embodiment of Fig. 6, the thermal energy is supplied to the cooling medium from the surroundings of the vehicle as illustrated by line 136 (e.g. by means of a radiator) and/or from electrical components as illustrated by line 138. Subsequently, the cooling medium flows through the compressor 140 and further into the condenser 142 in which the thermal energy transferred from the cooling medium to the passenger cabin of the vehicle. Subsequently, the cooling medium flows through the expansion valve 144. A pump 146 is arranged to ensure that a first part of the cooling medium flows past the electrical components (indicated by line 138) and that a second part of the cooling medium flows past the radiator (indicated by line 136). Alternatively, or as a supplement, a splitter valve may be arranged to ensure that a part of the flow is directed past the radiator and that another part is directed past the electrical components. It will be appreciated that in one embodiment, the system is adapted to control two flow streams such that the heat of the electrical components is used when these components generate a sufficient amount of thermal energy, whereas the radiator is used to supplement with thermal energy when the generation of thermal by the electrical components is not sufficient. Figure 7 shows a thermal energy administration system 150 in accordance with an embodiment of the present invention.
The thermal energy administration system 150 comprises a first heat exchanger 152, a second heat exchanger 154, a battery and/or power module of an electrical motor 156, a compressor 158, a four-way valve 160, a first expansion valve 162, a second expansion valve 164 and a pump 166. The first and second heat exchangers 152, 154 are similar to the first and second heat exchanges 102 and 104 of the thermal energy administration system 100. Similarly, the battery/power module 156 (shown as a single element in the system 100) is similar to the battery 116 and power module 118 of the system 100. The compressor 158, 4-way valve 160 and expansion valves 162 and 164 are similar to the elements 108, 110, and 112 of the circuit 100.

The battery/power module 156 may comprise a battery, a power module or both. In forms of the invention including both a power module and a battery, they could be provided in parallel, in a similar manner to the battery 116 and power module 118 described above.

The first heat exchanger 152, the second heat exchanger 154, the pipes, the compressor 158, and the first and second expansion valves 162 and 164 function as an air conditioning system. However depending on the flow direction (set by the 4-way valve 160), the first heat exchanger 152 and the second heat exchanger 154 operate in different ways. Due to the four-way valve 160, the compressor 158 may be operated to circulate the cooling medium in a clockwise direction and a counter clockwise direction when seen in Fig. 7.

When the flow direction is clockwise, the first heat exchanger 152 functions as a condenser, while the second heat exchanger 154 functions as an evaporator. The evaporator (the second heat exchanger 154 in this arrangement) will remove thermal energy from its surroundings and transfer this thermal energy to the cooling medium. Similarly, the condenser (the first heat exchanger 152) will transfer thermal energy from the cooling medium to the surroundings of the condenser. Thus, in the event that the second heat exchanger is inside a vehicle cabin, the clockwise flow results in the cabin temperature being reduced.

With a clockwise flow, the cooling medium is compressed by the compressor 158 and flows (at high pressure) through the first heat exchanger 152. The cooling medium passes through the expansion valve 162 and back to the second heat exchanger 154 (now at low pressure). The expansion valve 164 is redundant. High pressure cooling medium can flow via the battery/power module 156 under the control of the pump 166. Heat can thereby be removed from the battery/power module 156 and passed to the first heat exchanger 152. Note that cooling material flowing past the battery/power module 156 does not pass through the compressor 158.

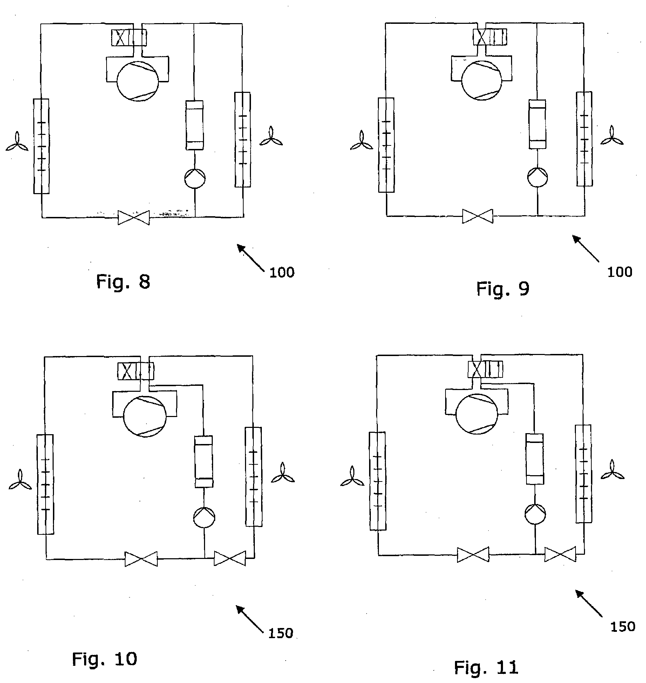

When the flow direction is counter clockwise, the first heat exchanger 152 functions as an evaporator, while the second heat exchanger 154 functions as a condenser. The evaporator (the first heat exchanger 152 in this arrangement) will remove thermal energy from its surroundings and transfer this thermal energy to the cooling medium and the condenser (the second heat exchanger 154) will transfer thermal energy from the cooling medium to the surroundings of the condenser. Thus, in the event that the second heat exchanger is inside a vehicle cabin, a counter clockwise flow results in the cabin temperature being increased.
With a counter clockwise flow, the cooling medium is compressed by the compressor 158 and flows (at high pressure) through the second heat exchanger 154. The cooling medium passes through the expansion valve 164 and back to the first heat exchanger 152 (now at low pressure). This time, the expansion valve 162 is redundant. High pressure cooling medium can flow via the battery/power module 156 under the control of the pump 166. Heat can thereby be removed from the batter/power module 156 and passed to the second heat exchanger 154. Note that once again the cooling material flowing past the battery/power module 156 does not pass through the compressor 158. Thus, in the event that the second heat exchanger is inside a vehicle cabin, heat removed from battery/power module 156 can be used to heat the vehicle cabin.
In the event that heat generated by the battery/power module 156 is used to heat a vehicle cabin and the heat extracted from the battery/power module is sufficient for the cabin heating requirements, then, in some forms of the invention, coolant can be circulated between the battery/power module 156 and the second heat exchanger 154 without requiring the use of the compressor 158 and without requiring coolant to be passed through the first heat exchanger 152. Figures 8 to 11 are flow diagrams demonstrating different aspects of the embodiments. Figure 8 shows the system 100 when used in an air conditioning mode. Figure 9 shows the system 100 when used in a heat pump mode. Figure 10 shows the system 150 when used in an air conditioning mode. Figure 11 shows the system 150 when used in a heat pump mode.

In the air conditioning mode of operation of the system 100 as shown in Figure 8, heat is removed (for example from the passenger cabin of a vehicle) to the cooling medium by evaporation of the cooling medium in the evaporator 104. The cooling material (which is at low pressure) is compressed and thermal energy is transferred from the cooling medium to the surroundings of the vehicle in the condenser 102. Cooling material can also be pumped through the power module in order to remove heat therefrom and that heat is also transferred to the surrounding of the vehicle in the condenser 102.

The air conditioning mode of the system 150 shown in Figure 10 operates in a similar manner. Heat is removed (for example from the passenger cabin of a vehicle) to the cooling medium by evaporation of the cooling medium in the evaporator 154. The cooling material (which is at low pressure) is compressed and thermal energy is transferred from the cooling medium to the surroundings of the vehicle in the condenser 152. Cooling material can also be pumped through the power module in order to remove heat therefrom and that heat is also transferred to the surrounding of the vehicle in the condenser 152.

In the heat pump mode of operation of the system 100 as shown in Figure 9, thermal energy is supplied to the cooling medium from the surroundings of the vehicle by means of evaporating the cooling material in the evaporator 102 and/or through the action of cooling electrical components (i.e. the battery/power module). Subsequently, the cooling medium is compressed before flowing to the condenser 104 where thermal energy is transferred from the cooling medium to the passenger cabin of the vehicle. Subsequently, the cooling medium flows through the expansion valve. Cooling material can be pumped passed the battery/power module in order to remove heat therefore, thereby cooling the battery/power module and providing energy that can be used to heat the vehicle cabin.

In the heat pump mode of operation of the system 150 as shown in Figure 11, thermal energy supplied to the cooling medium from the surroundings of the vehicle by means of evaporating the cooling material in the evaporator 152 is compressed before flowing to the condenser 154 where thermal energy is transferred from the cooling medium to the passenger cabin of the vehicle. Cooling material can also (or alternatively) be pumped passed the battery/power module in order to remove heat therefrom, thereby cooling the battery/power module and providing energy that can be used to heat the vehicle cabin. The heating arrangement shown in Figure 11 differs from that of Figure 9 in that the cooling medium passing the battery/power module is at high pressure (rather than low pressure as in Figure 9). Thus, the cooling medium that is heated by the battery/power module 156 does not need to pass through the compressor 158. The arrangement 150 is therefore more efficient that the arrangement 150 when used as a heat pump.
Another difference between the arrangements 100 and 150 when used as a heat pump is that if the battery/power module 156 can provide sufficient thermal energy to heat the vehicle cabin, then the evaporator is not required to be used. Thus, the compressor can be switched off and further energy can be saved. The embodiments of the invention described above are provided by way of example only. The skilled person will be aware of many modifications, changes and substitutions that could be made without departing from the scope of the present invention. The claims of the present invention are intended to cover all such modifications, changes and substitutions as fall within the scope of the invention.

## Claims

1. A thermal energy administration system for an electrical vehicle comprising an electrical motor for propelling the vehicle, the thermal energy management system comprising an air conditioning system defining a closed circuit which accommodates a cooling medium and comprises: a compressor, a first thermal energy exchanging device (152), a second thermal energy exchanging device (154) and a sub-circuit, wherein the sub-circuit comprises a third thermal energy exchanging device (156) which is arranged to transfer thermal energy between cooling medium in the sub-circuit and one or more electrical devices of the electrical vehicle, wherein the sub-circuit is adapted to circulate the cooling medium in a loop through the third thermal energy exchanging device and one of the first and the second thermal energy exchanging devices, **characterised in that** the system is arranged so that, in a first mode of operation, the cooling medium circulates in a loop through the third thermal energy exchanging device (156) and the first thermal energy exchanging device (152) without passing through the compressor (158) and, in a second mode of operation, the cooling medium circulates in a loop through the third thermal energy exchanging device (156) and the second thermal energy exchanging device (154) without passing through the compressor (158).

2. A thermal energy administration system according to claim 1, wherein the sub-circuit comprises a flow regulator (166) for controlling the flow of the cooling medium through said sub-circuit.

3. A thermal energy administration system according to claim 1 or claim 2, further comprising a plurality of sub-circuits, wherein each sub-circuit comprises a thermal energy exchanging device which is arranged to transfer thermal energy between the cooling medium in the sub-circuit and one or more electrical devices of the electrical vehicle, wherein each sub-circuit is adapted to circulate the cooling medium in a loop through the thermal energy exchanging device of said sub-circuit and one of the first and the second thermal energy exchanging devices.

4. A thermal energy administration system according to any of the preceding claims, wherein the air conditioning system further comprises a cooling medium flow direction shifting device (160) for shifting the flow direction of the cooling medium from a first direction in which the compressor pumps the cooling medium towards the first thermal energy exchanging device (152) to a second direction in which the compressor pumps the cooling medium towards the second thermal energy exchanging device (154).

5. An electrical vehicle comprising a thermal energy administration system according to any of the preceding claims.

6. An electrical vehicle as claimed in claim 5, wherein at least one of the one or more electrical devices of the electrical vehicle comprises a battery and/or the electrical motor and/or an audio system and/or an electrical engine and/or a combustion engine and/or a power controller for controlling the electrical power supplied to the electrical motor.

7. A method of operating an electrical motor of a motor vehicle, wherein the motor vehicle comprises a thermal energy administration system comprising an air conditioning system defining a closed circuit which accommodates a cooling medium, the air conditioning system having a compressor (158), a first thermal energy exchanging device (152), a second thermal energy exchanging device (154) and a sub-circuit, wherein the sub-circuit comprises a third thermal energy exchanging device (156) which is arranged to transfer thermal energy between cooling medium in the sub-circuit and one or more electrical devices of the electrical vehicle, the method comprising: circulating the cooling medium in a loop through the third thermal energy exchanging device and one of the first and the second thermal energy exchanging devices, **characterised in that** the method further comprising a first mode of operation in which the cooling medium circulates in a loop through the third thermal energy exchanging device (156) and the first thermal energy exchanging device (152) without passing through the compressor (158) and a second mode of operation in which the cooling medium circulates in a loop through the third thermal energy exchanging device (156) and the second thermal energy exchanging device (154) without passing through the compressor (158).

8. A method as claimed in claim 7, further comprising controlling the flow of the cooling medium through said sub-circuit.

9. A method as claimed in claim 7 or claim 8, wherein the thermal energy administration system comprises a plurality of sub-circuits, wherein each sub-circuit comprises a thermal energy exchanging device which is arranged to transfer thermal energy between the cooling medium in the sub-circuit and one or more electrical devices of the electrical vehicle, wherein each sub-circuit is adapted to circulate the cooling medium in a loop through the thermal energy exchanging device of said sub-circuit and one of the first and the second thermal energy exchanging devices.

## Patentansprüche

1. Wärmeenergieverwaltungssystem für ein elektrisches Fahrzeug, das einen elektrischen Motor zum Antreiben des Fahrzeugs umfasst, wobei das Wärmeenergieverwaltungssystem eine Klimaanlage umfasst, die einen geschlossenen Kreislauf definiert, der ein Kühlmedium aufnimmt und einen Kompressor, eine erste Wärmeenergie-Austauschvorrichtung (152), eine zweite Wärmeenergie-Austauschvorrichtung (154) und einen Teilkreislauf umfasst, wobei der Teilkreislauf eine dritte Wärmeenergie-Austauschvorrichtung (156) umfasst, die so angeordnet ist, dass sie Wärmeenergie zwischen dem Kühlmedium im Teilkreislauf und einer oder mehreren elektrischen Vorrichtungen des elektrischen Fahrzeugs überträgt, wobei der Teilkreislauf so ausgelegt ist, dass er das Kühlmedium in einer Schleife durch die dritte Wärmeenergie-Austauschvorrichtung und die erste oder zweite Wärmeenergie-Austauschvorrichtung umwälzt, **dadurch gekennzeichnet, dass** das System so angeordnet ist, dass in einer ersten Betriebsart das Kühlmedium in einer Schleife durch die dritte Wärmeenergie-Austauschvorrichtung (156) und die erste Wärmeenergie-Austauschvorrichtung (152) zirkuliert, ohne den Kompressor (158) zu durchlaufen, und in einer zweiten Betriebsart das Kühlmedium in einer Schleife durch die dritte Wärmeenergie-Austauschvorrichtung (156) und die zweite Wärmeenergie-Austauschvorrichtung (154) zirkuliert, ohne den Kompressor (158) zu durchlaufen.

2. Wärmeenergieverwaltungssystem nach Anspruch 1, wobei der Teilkreislauf einen Strömungsregler (166) zum Regeln des Durchflusses des Kühlmediums durch den Teilkreislauf umfasst.

3. Wärmeenergieverwaltungssystem nach Anspruch 1 oder Anspruch 2, das ferner mehrere Teilkreisläufe umfasst, wobei jeder Teilkreislauf eine Wärmeenergie-Austauschvorrichtung umfasst, die so angeordnet ist, dass sie Wärmeenergie zwischen dem Kühlmedium im Teilkreislauf und einer oder mehreren elektrischen Vorrichtungen des elektrischen Fahrzeugs überträgt, wobei jeder Teilkreislauf so ausgelegt ist, dass er das Kühlmedium in einer Schleife durch die Wärmeenergie-Austauschvorrichtung dieses Teilkreislaufes und die erste oder zweite Wärmeenergie-Austauschvorrichtung umwälzt.

4. Wärmeenergieverwaltungssystem nach einem der vorhergehenden Ansprüche, wobei die Klimaanlage ferner eine Kühlmedium-Strömungsrichtungsschaltvorrichtung (160) zum Umschalten der Strömungsrichtung des Kühlmediums von einer ersten Richtung, in der die Kompressorpumpen das Kühlmedium zur ersten Wärmeenergie-Austauschvorrichtung (152) pumpen, zu einer zweiten Richtung, in der die Kompressorpumpen das Kühlmedium zur zweiten Wärmeenergie-Austauschvorrichtung (154) pumpen, umfasst.

5. Elektrisches Fahrzeug, das ein Wärmeenergieverwaltungssystem nach einem der vorhergehenden Ansprüche umfasst.

6. Elektrisches Fahrzeug nach Anspruch 5, wobei wenigstens eine der einen oder mehreren elektrischen Vorrichtungen des elektrischen Fahrzeugs eine Batterie und/oder den elektrischen Motor und/oder ein Audiosystem und/oder eine elektrische Maschine und/oder eine Brennkraftmaschine und/oder einen Leistungsregler zum Regeln der an den elektrischen Motor gelieferten elektrischen Leistung umfasst.

7. Verfahren zum Betreiben eines elektrischen Motors eines Kraftfahrzeugs, wobei das Kraftfahrzeug ein Wärmeenergieverwaltungssystem umfasst, das eine Klimaanlage umfasst, die einen geschlossenen Kreislauf definiert, der ein Kühlmedium aufnimmt, wobei die Klimaanlage einen Kompressor (158), eine erste Wärmeenergie-Austauschvorrichtung (152), eine zweite Wärmeenergie-Austauschvorrichtung (154) und einen Teilkreislauf umfasst, wobei der Teilkreislauf eine dritte Wärmeenergie-Austauschvorrichtung (156) umfasst, die so angeordnet ist, dass sie Wärmeenergie zwischen dem Kühlmedium im Teilkreislauf und einer oder mehreren elektrischen Vorrichtungen des elektrischen Fahrzeugs überträgt, wobei das Verfahren umfasst: Umwälzen des Kühlmediums in einer Schleife durch die dritte Wärmeenergie-Austauschvorrichtung und die erste oder die zweite Wärmeenergie-Austauschvorrichtung, **dadurch gekennzeichnet, dass** das Verfahren ferner umfasst: eine erste Betriebsart, in welcher das Kühlmedium in einer Schleife durch die dritte Wärmeenergie-Austauschvorrichtung (156) und die erste Wärmeenergie-Austauschvorrichtung (152) zirkuliert, ohne den Kompressor (158) zu durchlaufen, und eine zweite Betriebsart, in welcher das Kühlmedium in einer Schleife durch die dritte Wärmeenergie-Austauschvorrichtung (156) und die zweite Wärmeenergie-Austauschvorrichtung (154) zirkuliert, ohne den Kompressor (158) zu durchlaufen.

8. Verfahren nach Anspruch 7, ferner umfassend:
Regeln des Durchflusses des Kühlmediums durch den Teilkreislauf.

9. Verfahren nach Anspruch 7 oder Anspruch 8, wobei das Wärmeenergieverwaltungssystem mehrere Teilkreisläufe umfasst, wobei jeder Teilkreislauf eine Wärmeenergie-Austauschvorrichtung umfasst, die so angeordnet ist, dass sie Wärmeenergie zwischen dem Kühlmedium im Teilkreislauf und einer oder mehreren elektrischen Vorrichtungen des elektrischen Fahrzeugs überträgt, wobei jeder Teilkreislauf so ausgelegt ist, dass er das Kühlmedium in einer Schleife durch die Wärmeenergie-Austauschvorrichtung dieses Teilkreislaufes und die erste oder zweite Wärmeenergie-Austauschvorrichtung umwälzt.

## Revendications

1. Système de gestion d'énergie thermique pour un véhicule électrique comprenant un moteur électrique pour propulser le véhicule, le système de gestion d'énergie thermique comportant un système de conditionnement d'air définissant un circuit fermé qui contient un agent de refroidissement et comprend : un compresseur, un premier dispositif d'échange d'énergie thermique (152), un deuxième dispositif d'échange d'énergie thermique (154) et un circuit secondaire, dans lequel le circuit secondaire comprend un troisième dispositif d'échange d'énergie thermique (156) qui est conçu pour transférer de l'énergie thermique entre l'agent de refroidissement dans le circuit secondaire et un ou plusieurs dispositifs électriques du véhicule électrique, dans lequel le circuit secondaire est adapté pour faire circuler l'agent de refroidissement dans une boucle à travers le troisième dispositif d'échange d'énergie thermique et l'un des premier et deuxième dispositifs d'échange d'énergie thermique, **caractérisé en ce que** le système est conçu de telle sorte que, dans un premier mode de fonctionnement, l'agent de refroidissement circule dans une boucle à travers le troisième dispositif d'échange d'énergie thermique (156) et le premier dispositif d'échange d'énergie thermique (152) sans passer à travers le compresseur (158) et, dans un second mode de fonctionnement, l'agent de refroidissement circule dans une boucle à travers le troisième dispositif d'échange d'énergie thermique (156) et le deuxième dispositif d'échange d'énergie thermique (154) sans passer à travers le compresseur (158).

2. Système de gestion d'énergie thermique selon la revendication 1, dans lequel le circuit secondaire comprend un régulateur d'écoulement (166) pour réguler l'écoulement de l'agent de refroidissement à travers ledit circuit secondaire.

3. Système de gestion d'énergie thermique selon la revendication 1 ou la revendication 2, comprenant en outre une pluralité de circuits secondaires, dans lequel chaque circuit secondaire comprend un dispositif d'échange d'énergie thermique qui est conçu pour transférer de l'énergie thermique entre l'agent de refroidissement dans le circuit secondaire et un ou plusieurs dispositifs électriques du véhicule électrique, dans lequel chaque circuit secondaire est adapté pour faire circuler l'agent de refroidissement dans une boucle à travers le dispositif d'échange d'énergie thermique dudit circuit secondaire et l'un des premier et deuxième dispositifs d'échange d'énergie thermique.

4. Système de gestion d'énergie thermique selon l'une quelconque des revendications précédentes, dans lequel le système de conditionnement d'air comprend en outre un dispositif de changement de direction de la circulation de l'agent de refroidissement (160) pour changer la direction de circulation de l'agent de refroidissement depuis une première direction dans laquelle le compresseur pompe l'agent de refroidissement vers le premier dispositif d'échange d'énergie thermique (152), vers une seconde direction dans laquelle le compresseur pompe l'agent de refroidissement vers le deuxième dispositif d'échange d'énergie thermique (154).

5. Véhicule électrique comprenant un système de gestion d'énergie thermique selon l'une quelconque des revendications précédentes.

6. Véhicule électrique selon la revendication 5, dans lequel un et/ou plusieurs dispositifs électriques du véhicule électrique comprennent une batterie et/ou le moteur électrique et/ou un système audio et/ou un moteur électrique et/ou un moteur de combustion et/ou un dispositif de commande de puissance pour commander l'énergie électrique fournie au moteur électrique.

7. Procédé de fonctionnement d'un moteur électrique d'un véhicule électrique, dans lequel le véhicule électrique comprend un système de gestion d'énergie thermique comprenant un système de conditionnement d'air définissant un circuit fermé qui contient un agent de refroidissement, le système de conditionnement d'air ayant un compresseur (158), un premier dispositif d'échange d'énergie thermique (152), un deuxième dispositif d'échange d'énergie thermique (154) et un circuit secondaire, dans lequel le circuit secondaire comprend un troisième dispositif d'échange d'énergie thermique (156) qui est conçu pour transférer de l'énergie thermique entre l'agent de refroidissement dans le circuit secondaire et un ou plusieurs dispositifs électriques du véhicule électrique, le procédé consistant : à faire circuler l'agent de refroidissement dans une boucle à travers le troisième dispositif d'échange d'énergie thermique et l'un des premier et deuxième dispositifs d'échange d'énergie thermique, **caractérisé en ce que** le procédé comprend en outre un premier mode de fonctionnement dans lequel l'agent de refroidissement circule dans une boucle à travers le troisième dispositif d'échange d'énergie thermique (156) et le premier dispositif d'échange d'énergie thermique (152) sans passer à travers le compresseur (158), et un second mode de fonctionnement dans lequel l'agent de refroidissement circule dans une boucle à travers le troisième dispositif d'échange d'énergie thermique (156) et le deuxième dispositif d'échange d'énergie thermique (154) sans passer à travers le compresseur (158).

8. Procédé selon la revendication 7, consistant en outre à réguler l'écoulement de l'agent de refroidissement à travers ledit circuit secondaire.

9. Procédé selon la revendication 7 ou la revendication 8, dans lequel le système de gestion d'énergie thermique comprend une pluralité de circuits secondaires, dans lequel chaque circuit secondaire comprend un dispositif d'échange d'énergie thermique qui est conçu pour transférer de l'énergie thermique entre l'agent de refroidissement dans le circuit secondaire et un ou plusieurs dispositifs électriques du véhicule électrique, dans lequel chaque circuit secondaire est adapté pour faire circuler l'agent de refroidissement dans une boucle à travers le dispositif d'échange d'énergie thermique dudit circuit secondaire et l'un des premier et deuxième dispositifs d'échange d'énergie thermique.
